# EUROPEAN PATENT SPECIFICATION

(11) **EP 0 643 801 B1**
(45) Date of publication and mention of the grant of the patent: **16.09.1998**
(21) Application number: 92912821.3
(22) Date of filing: 03.06.1992
(51) Int. Cl.: F02B 47/02, F02M 25/022, F02D 19/12

(54) **WATER INTRODUCTION IN INTERNAL COMBUSTION ENGINES**
WASSERZUFUHR IN EINER BRENNKRAFTMASCHINE
SYSTEME D'INTRODUCTION D'EAU DANS DES MOTEURS A COMBUSTION INTERNE

(43) Date of publication of application: 22.03.1995
(73) Proprietor: HOBBS, Cletus Lee, Harrisonburg, VA 22801 (US)
(72) Inventor: HOBBS, Cletus Lee, Harrisonburg, VA 22801 (US)
(74) Representative: Jenkins, Peter David
(86) International application number: PCT/US92/04531
(87) International publication number: WO 93/24746

(56) References cited:
- DE-A- 2 843 335
- GB-A- 2 226 595
- US-A- 4 290 392
- US-A- 4 301 655
- US-A- 4 322 950
- US-A- 4 393 817
- US-A- 4 397 268
- US-A- 4 417 447
- US-A- 4 502 420
- US-A- 4 558 665
- US-A- 4 979 482
- US-A- 5 012 772
- US-A- 5 125 366
- "Automotive Handbook" 2nd Edition, 1986, Robert Bosch GmbH.
- "Development of new electronically controlled diesel system - ECD-V3 System" - H.Fujisawa et al - 16th International Symposium on Automotive Technology and Automation 11th - 15th May 1987.

## Description

This invention pertains to internal combustion engines and particularly to such engines where water is injected into the combustion chambers under precisely controlled conditions.

The benefits and gains in fuel economy by the injection of water into the cylinders of an internal combustion engine have long been known. However, all previously known methods of injecting water into the cylinders have inherent drawbacks in design, making mass production of water injected engines undesirable.

Representative of the prior art devices are the following patents: US-A-864,877 shows an explosive engine having an inlet duct to the combustion chamber; US-A-2,101,554 shows an internal combustion engine having a solenoid operated valve for injecting water into a secondary chamber; US-A-2,218,522 shows an internal combustion chamber having a water injecting valve opening into the combustion chamber; US-A-2,489,177 shows a water injection valve in the engine cylinder; US-A-3,074,228 shows a combined internal combustion and steam engine; US-A-4,018,192 discloses a water injection system for internal combustion engines; US-A-4,417,441 shows a combustion chamber in the piston head; US-A-4,589,377 discloses an injector fitted in the combustion chamber; US-A-422,950 discloses a valve injector in the combustion chamber.

In all previous systems, the introduction of water into the combustion chambers has been achieved by mechanical means - the injectors being mechanically driven by camshafts, gears or sprockets. In all of the prior known art, any gains made in fuel economy are offset by drawbacks in design. Many previous systems require major mechanical changes in engine design, some are antiquated and have an extensive number of parts prone to failure or breakdown. However, the main disadvantage to all currently known systems of water injection is that control over the injection of the water in response to changing engine requirements is very limited.

US-A-4,502,420 and US-A-4,558,665 disclose systems which have attempted to solve this problem by controlling the injectors with a computer or electronic control unit. However, these two systems are still mechanical in nature because although the injectors are computer controlled, the actual introduction of water into the cylinder is still limited and ultimately controlled by a mechanically operated valve (the intake valve of the engine). This is highly undesirable because the water can only enter the cylinder when the intake valve is open. Therefore, injection of water can only take place on the intake stroke of the piston.

The system herein described is unique in its ability to introduce water into the cylinder chambers simultaneously, sequentially cr one at a time at any given point in the engine cycle and is not restricted to any open or closed position of the intake valve.

It is one aim of this invention to provide an internal combustion engine with a water injector system which employs an electrical signal to operate an injector valve in response to predetermined engine conditions.

Another aim of this invention is to provide a water injector system for an internal combustion engine having a pressure regulator to keep the water pressure at a constant pressure.

Yet another aim of this invention is to provide an internal combustion engine with a water injector system that is controlled by a computer in response to the data provided by one or more sensors located at various points on the engine.

A still further aim of this invention is to provide an internal combustion engine with a water injector system which receives data from a computer in response to the signal of a sensor mounted on the intake manifold where manifold pressure is measured as engine load increases.

A yet still further aim of this invention is to provide an internal combustion engine with a water injector system which is controlled by a computer which selects the proper volume of water to be injected into the engine in relation to such factors as engine load, engine temperature, and the octane of the fuel.

Accordingly, the present invention provides a water injector system for an internal combustion engine having combustion chambers, comprising injectors having nozzles communicating in use with the combustion chambers, a source of water, a water supply conduit connecting each of the injectors to the source of water, and sensors for sensing conditions of the engine during operation; characterized in that the water injector system further comprises a water delivery pump disposed in the source of water for supplying a constant flow of water, a remote high pressure pump connected between the source of water and the water supply conduit, a remote water pressure regulator connected between the high pressure pump and the injectors, and a computer connected to each of the injectors and to each of the sensors, the computer in use sensing the engine conditions and determining a volume of water to be injected into the engine to correct an abnormal condition, said volume of water being in use injected into the combustion chambers by the high pressure pump, assisted by the water delivery pump.

A preferred embodiment of the present invention will now be described by way of example only with reference to the accompanying drawings, in which:

Figure 1 is a cross-sectional view of an engine incorporating a water injector of a water injector system in accordance with a preferred embodiment of the present invention.

Figure 2 is a block diagram showing an internal combustion engine incorporating the water injector system of the preferred embodiment of the present invention, showing particularly the central computer having electrical connections to various sensors on the engine.

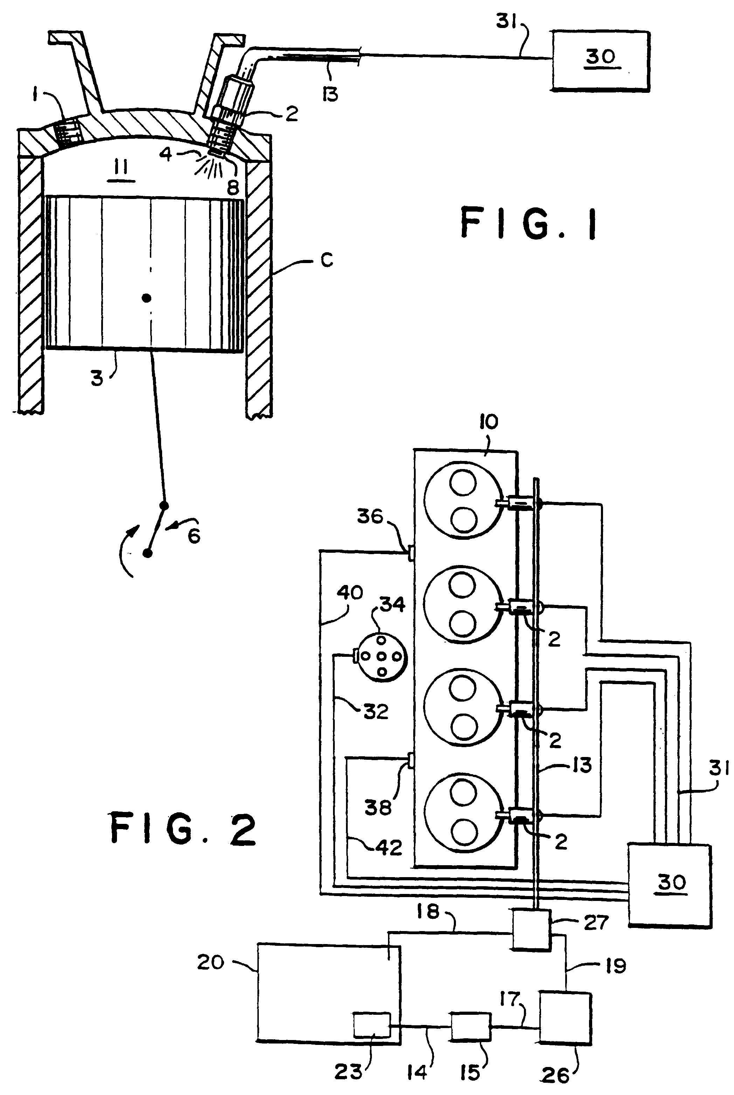

Referring now in more detail to the drawings, Figure 1 shows an engine cylinder C having a spark plug opening 1, a water injector 2, a piston 3 and a crankshaft 6.

It will be understood that the cylinder head 10 (see Figure 2) has a plurality of injectors 2 extending into the combustion chambers 11. Since all injectors are identical, only one will be described.

The injector 2 is fitted to the cylinder C by threading or the like. The nozzle 8 has an opening communicating with the interior of combustion chamber 11. The injectors 2 have a water supply conduit 13 leading to a source of water, such as a tank 20, located at any convenient location on the engine or its support. This water source may be pressurized by any suitable means. The injector 2 is controlled by a computer 30.

It will be understood that fuel will be supplied into the combustion chambers 11 in the usual manner.

The tank 20 has a water delivery pump 23 therein. The water delivery pump 23 maintains a steady flow of water to a high pressure injector pump 26. A line 14 connects the water delivery pump 23 to a filter 15 which is connected by a line 17 to the high pressure pump 26. This high pressure pump 26 is remote from the cylinder head 10 and has a line 19 leading to a water pressure regulator 27. The regulator 27 is also remote from the engine and is removable with the high pressure pump 26 as a single unit from the conduit 13 and the tank 20 by any suitable means such as clamp means. A return line 18 is connected between the regulator 27 and the tank 20. The advantage of having the high pressure pump 26 and regulator 27 as a unit is the facilitation of the removal and replacement of a defective unit.

The computer 30 has an input electrical connection line 32 from the distributor 34. A plurality of sensors 36, 38 are attached to the cylinder head 10 and each has a connection 40, 42 to the input of the computer 30. Each injector 2 has an electrical connection 31 to the computer 30. It will be appreciated that the injector 2 has a valve therein which is operated by the computer 30 when it senses abnormal engine conditions through the sensors 36, 38 and/or distributor 34.

In operation, the computer 30 senses an abnormal condition such as overheating, knock or engine load through the distributor 34 and/or sensors 36, 38 and computes a predetermined volume of water necessary for the engine to run at peak efficiency. The computer 30 then operates one or more of the injectors 2 to cause the water to be injected into any one of the combustion chambers 11, either sequentially, simultaneously, or singly depending on the condition and the required change. The computer 30 opens one or more of the injectors 2 for a predetermined time allowing a spray of water to be injected into the combustion chambers 11. The high pressure pump 26 ensures an optimum pressure of water to the injectors 2, and the water supply pump 23 maintains a steady flow of water to the high pressure pump 26. Once the predetermined amount of water has been injected, the computer 30 closes the injectors 2, thus stopping flow of water into the combustion chambers 11.

This system provides a totally electronically/computer controlled system which will allow an engine to operate at peak efficiency. It solves problems that all the known systems have failed to solve.

This system is easily adaptable to any internal combustion engine, and is designed with a minimum of mechanical parts. Therefore, it is less prone to failure. The separable pump/regulator unit facilitates ease of replacing an inoperable unit.

This system allows the injection of water at any point in the piston's cycle and is not dependent on the opening of an internal valve.

This system will infinitely and instantaneously adjust to the requirements of the engine.

The amount of water injected, the point in the piston's cycle that injection takes place, and the length of time the injector remains open are all precisely controlled by computer and can instantly change as the requirements of the engine change.

## Claims

1. A water injector system for an internal combustion engine having combustion chambers (11), comprising injectors (2) having nozzles (8) communicating in use with the combustion chambers (11), a source of water (20), a water supply conduit (13) connecting each of the injectors (2) to the source of water (20), and sensors (34, 36, 38) for sensing conditions of the engine during operation; characterized in that the water injector system further comprises a water delivery pump (23) disposed in the source of water (20) for supplying a constant flow of water, a remote high pressure pump (26) connected between the source of water (20) and the water supply conduit (13), a remote water pressure regulator (27) connected between the high pressure pump (26) and the injectors (2), and a computer (30) connected to each of the injectors (2) and to each of the sensors (34, 36, 38), the computer (30) in use sensing the engine conditions and determining a volume of water to be injected into the engine to correct an abnormal condition, said volume of water being in use injected into the combustion chambers (11) by the high pressure pump (26), assisted by the water delivery pump (23).

2. A water injector system for an internal combustion engine according to claim 1, wherein the source of water (20) is a water tank having the water delivery pump (23) disposed therein.

3. A water injector system for an internal combustion engine according to claim 1, wherein the water pressure regulator (27) is configured to regulate the water pressure injected into the combustion chambers (11).

4. A water injector system for an internal combustion engine according to claim 1, wherein the high pressure pump (26) and the water pressure regulator (27) are a single unit removably attached to the water supply conduit (13).

## Patentansprüche

1. Wassereinspritzsystem für einen Verbrennungsmotor mit Verbrennungskammern (11), die Injektoren (2) mit Düsen (8) aufweisen, welche bei Betrieb mit den Verbrennungskammern (11) in Verbindung stehen, einer Wasserquelle (20), einer Wasserzuführleitung (13), die jeden Injektor (2) mit der Wasserquelle (20) verbindet, sowie mit Fühlern (34,36,38) zum Abtasten des Motorzustands während des Betriebes, dadurch gekennzeichnet, daß das Wassereinspritzsystem ferner aufweist: eine in der Wasserquelle (20) angeordnete Wasserabgabepumpe (23) zur Lieferung einer konstanten Wasserströmung, eine außen gelegene Hochdruckpumpe (26), die zwischen der Wasserquelle (20) und der Wasserzuführleitung (13) angeschlossen ist, einen außen gelegenen Wasserdruckregler (27), der zwischen der Hochdruckpumpe (26) und den Injektoren (2) angeschlossen ist, sowie einen Computer (30), der mit jedem Injektor (2) und mit jedem Fühler (34,36,38) verbunden ist, wobei der Computer(30) bei Betrieb den Motorzustand abtastet und ein in den Motor einzuspritzendes Wasservolumen festlegt, um einen anormalen Zustand zu korrigieren, und wobei das Wasservolumen bei Betrieb in die Verbrennungskammern (11) durch die Hochdruckpumpe (26) mit Unterstützung der Wasserabgabepumpe (23) eingespritzt wird.

2. Wassereinspritzsystem für einen Verbrennungsmotor nach Anspruch 1, bei welchem die Wasserquelle (20) ein Wasserbehälter mit einer darin angeordneten Wasserabgabepumpe (23) ist.

3. Wassereinspritzsystem für einen Verbrennungsmotor nach Anspruch 1, bei welchem der Wasserdruckregler (27) so ausgebildet ist, daß er den in die Verbrennungskammern (11) eingespritzten Wasserdruck regelt.

4. Wassereinspritzsystem für einen Verbrennungsmotor nach Anspruch 1, bei welchem die Hochdruckpumpe (26) und der Wasserdruckregler (27) eine Einheit bilden, die an der Wasserzuführleitung (13) abnehmbar befestigt ist.

## Revendications

1. Système injecteur d'eau pour un moteur à combustion interne comportant des chambres de combustion (11), comprenant des injecteurs (2) comportant des buses (8) communiquant en utilisation avec les chambres de combustion (11), une source d'eau (20), une conduite de fourniture d'eau (13) reliant chacun des injecteurs (2) à la source d'eau (20) et des capteurs (34, 36, 38) pour détecter les conditions du moteur pendant son fonctionnement ; caractérisé en ce que le système injecteur d'eau comprend en outre une pompe de fourniture d'eau (23) disposée dans la source d'eau (20) pour fournir un débit d'eau constant, une pompe haute pression éloignée (26) connectée entre la source d'eau (20) et la conduite de fourniture d'eau (13), un régulateur de pression d'eau éloigné (27) connecté entre la pompe de pression haute (26) et les injecteurs (2), et un ordinateur (30) connecté à chacun des injecteurs (2) et à chacun des capteurs (34, 36, 38), l'ordinateur (30) détectant en utilisation les conditions du moteur et déterminant le volume d'eau à injecter dans le moteur pour corriger une condition anormale, le volume d'eau étant injecté en utilisation dans les chambres de combustion (11) par la pompe haute pression (26) assistée par la pompe de fourniture d'eau (23).

2. Système injecteur d'eau pour moteur à combustion interne selon la revendication 1, dans lequel la source d'eau (20) est un réservoir d'eau dans lequel est disposée la pompe de fourniture d'eau (23)

3. Système injecteur d'eau pour moteur à combustion interne selon la revendication 1, dans lequel le régulateur de pression d'eau (27) a une configuration propre à réguler la pression d'eau injectée dans les chambres de combustion (11).

4. Système injecteur d'eau pour moteur à combustion interne selon la revendication 1, dans lequel la pompe haute pression (26) et le régulateur de pression d'eau (27) sont un module unique lié de façon démontable à la conduite de fourniture d'eau (13).
